# FASCICULE DE BREVET EUROPEEN

(11) **EP 4 279 872 B1**
(45) Date de publication et mention de la délivrance du brevet: **28.08.2024**
(21) Numéro de dépôt: 23173539.0
(22) Date de dépôt: 16.05.2023
(51) Int. Cl.: G01D 5/14, G01D 5/245, G01D 7/00, G05G 5/03, G06F 3/01, G06F 3/0354, H01H 19/14, H01H 36/00, G06F 3/0362, G05G 1/10, G05G 5/06

(54) **CODEUR MAGNÉTIQUE INCRÉMENTAL**
INKREMENTALER MAGNETISCHER CODIERER
INCREMENTAL MAGNETIC ENCODER

(30) Priorité: 17.05.2022 FR 2204669
(43) Date de publication de la demande: 22.11.2023
(73) Titulaire: THALES, 92400 Courbevoie (FR)
(72) Inventeur: BESNARD, Mathieu, 33700 MERIGNAC (FR)
(74) Mandataire: Lavoix

(56) Documents cités:
- WO-A1-2021/023951
- FR-A1- 3 062 935
- FR-A1- 3 089 314
- US-A1- 2004 100 440

## Description

### DOMAINE DE L'INVENTION

La présente invention concerne un codeur magnétique incrémental.

Plus particulièrement, la présente invention concerne un codeur apte à fournir des signaux logiques binaires représentant des incréments de position relative de deux éléments du codeur, les deux éléments étant mobiles l'un par rapport à l'autre. Avantageusement, un tel codeur est applicable dans le domaine aéronautique, par exemple dans un cockpit de pilotage d'un aéronef.

Typiquement, dans une application pour des équipements aéronautiques, on peut utiliser un codeur angulaire et/ou linéaire pour indiquer à un calculateur de pilotage automatique une consigne d'altitude ou de vitesse que l'opérateur choisit en actionnant un bouton de commande du codeur. La fiabilité du codeur et des informations qu'il délivre est alors un élément essentiel du codeur. Le besoin typique pour un codeur aéronautique peut comprendre un ou plusieurs des éléments suivants : compacité, capacité d'effectuer des multi-tours en rotation et/ou une course linéaire, capacité d'incrémentation et de crantage, etc. Afin de permettre sa certification, le codeur aéronautique doit également pouvoir répondre à des niveaux de sécurité DAL (de l'anglais « *Design Assurance Level* ») élevés, notamment au niveau DAL A.

En particulier, en ce qui concerne la compacité, un codeur présente typiquement un bouton de commande de diamètre entre 10 à 100 mm et de longueur entre 5 et 50 mm (typiquement Ø 16 mm x Ig 16 mm) et un corps de diamètre entre 10 à 100 mm et de longueur entre 5 et 100 mm (typiquement Ø 25 mm x Ig 50 mm) caché derrière le panneau de fixation ou fixé devant ce panneau. Dans ce dernier cas, le bouton englobe le corps du codeur qui est fixé sur le panneau et permet d'être placé autour, voire légèrement en chevauchement d'un moniteur ou écran.

En ce que concerne la capacité d'incrémentation, chaque passage de cran (ou pas) constitue un incrément d'une unité de comptage de la rotation ou de la translation. La résolution angulaire ou linéaire est définie pas le pas (ou cran). Le nombre de pas par tour est de l'ordre de 1 à 32 pas (typiquement 12 pas). Le nombre de pas en translation est de 1 à 10 crans (typiquement 1 cran dans chaque direction pour obtenir un bouton « push/pull » avec un état stable entre les deux crans).

Pour détecter le sens du mouvement en rotation et/ou en translation, le codeur dispose généralement d'au moins deux détecteurs (respectivement pour la rotation et la translation) décalés physiquement entre eux (typiquement un nombre impair de quart de pas). Ces deux détecteurs permettent l'encodage du mouvement en rotation et/ou en translation sur deux bits. Ainsi, l'encodage donne les valeurs successives suivantes : 00, 01, 11, 10 lorsque le codeur tourne et/ou translate dans un sens et les valeurs successives suivantes : 00, 10, 11, 01 lorsque le codeur tourne et/ou translate dans l'autre sens. Il est donc possible de déterminer non seulement l'apparition d'un incrément en rotation et/ou en translation (changement d'état de l'un des bits) mais aussi le sens de rotation (par comparaison entre un état détecté et l'état immédiatement antérieur).

En ce qui concerne la capacité de crantage des codeurs, le passage de cran encodé entraîne généralement un retour tactile qu'un opérateur doit ressentir lors de la manoeuvre du dispositif. Le couple de crantage angulaire peut par exemple être de l'ordre de 1 à 700 mN.m (typiquement 12 mN.m) et l'effort de crantage linéaire de l'ordre de 0,5 à 20 N (typiquement 6 N).

Les codeurs les plus complexes disposent d'encodage et de crantage en rotation et en translation. L'encodage et le crantage en rotation ne doivent pas être bloqués par ceux en translation. Dans ce cas, la détection et le crantage en rotation et en translation doivent pouvoir être utilisés simultanément sans perte de performance. Par exemple, pour saisir une vitesse, le pilote devra simultanément pousser le bouton du codeur et le tourner jusqu'à la valeur choisie.

Enfin, dans certain cas, pour sécuriser le codeur et notamment pour garantir son niveau de sécurité DAL (par exemple DAL A), les fonctions de détection (ou d'encodage) sont au moins doublées.

### ÉTAT DE LA TECHNIQUE

Pour répondre aux besoins précités, les codeurs utilisés dans les applications aéronautiques sont souvent basés sur des solutions opto-mécaniques (détection optique et crantage mécanique) ou électromécanique (détection par contact électrique et crantage mécanique) et parfois magnéto-mécanique (détection magnétique et crantage mécanique) ou opto-magnétique ou même purement magnétique.

Par exemple, des codeurs opto-mécaniques sont décrits dans les documents FR 2937129 et FR 2954491. Selon ces documents, la détection en rotation et/ou en translation (encodage) est faite par un codeur optique alors que le maintien en position stable (crantage) est assuré mécaniquement par au moins une bille mise en pression par un ressort sur un chemin de bille (ou came). Même si ces dernières innovations répondent aux besoins décrits ci-dessus et visent à simplifier leur réalisation, ces codeurs opto-mécaniques et électromécaniques demeurent des assemblages complexes constitués de nombreuses pièces de grande précision.

Plus généralement, les solutions actuelles à crantage mécanique génèrent de la friction (exemple : bille contre came) et de l'usure ce qui limite la durée de vie du dispositif, notamment lorsque des pièces en plastique sont utilisées. Dans les codeurs électromécaniques, la détection et le crantage sont parfois liés par au moins une pièce mécanique commune qui sert à la fois au click et à la détection via un contact électrique. Ce dernier est souvent exposé au risque d'usure, de « fretting corrosion » (corrosion de contact) et limite la durée de vie du dispositif. De plus, dans les dispositifs opto-mécaniques et parfois électromécaniques, la détection et le crantage sont découplés, c'est-à-dire qu'ils résultent de solution et/ou phénomène différents et sont assez éloignés physiquement. Ce découplage augmente le nombre de pièces et par conséquent, le risque de décalage entre la détection et le crantage. Dans le cas de codeur complexe et sécurisé, le nombre de pièces est encore plus important. Dans ce cas, pour assurer une bonne performance et fiabilité, les codeurs complexes actuels requièrent des pièces de grande précision qui sont plus coûteuses.

On connait également le document FR 2370350 qui décrit un codeur magnétique rotatif à aimants mobiles dans lequel le crantage et l'encodage sont issus du phénomène magnétique. Toutefois, le codeur de ce document est uniquement rotatif et utilise des aimants mobiles qui sont exposés à des risques de frottement et de coincement.

En résumé, les solutions électromécaniques présentent le plus fort risque de fatigue tant au niveau du crantage que de l'encodage car elles génèrent le plus de frottement. Par ailleurs, l'encodage électrique est exposé à la corrosion de contact (« fretting corrosion »). Ces inconvénients diminuent la fiabilité et limitent la durée de vie du dispositif.

Les solutions opto-mécaniques et magnéto-mécaniques conservent le risque de fatigue au niveau du crantage mécanique.

Les solutions opto-magnétiques utilisent des phénomènes sans contact différents. Ces solutions sont plus encombrantes si on souhaite faire un codeur plus complexe (exemple : codeur rotatif avec « push/pull ») et sécurisé.

Enfin, les solutions purement magnétiques ne permettent pas de répondre à l'ensemble des besoins précités.

FR 3 062 935 A1 décrit un module de commande rotatif connu, en particulier pour habitacle de véhicule, comprenant un stator et un rotor mobile en rotation par rapport au stator, qui comporte des aimants coopérant avec des éléments magnétiques, les aimants et les éléments magnétiques étant solidaires pour les uns du rotor et les autres du stator, et au moins un capteur à effet Hall coopérant avec les aimants, le capteur à effet Hall et les aimants étant solidaires pour les uns du rotor et les autres du stator, pour repérer la position en rotation du rotor. Ces éléments définissent des moyens magnétiques de détection de la position relative et des moyens magnétiques de retour haptique.

FR 3 089 314 A1, WO2021/023951 A1 et US 2004/0100440 A1 décrivent d'autres exemples connus de modules de commande comprenant une détection magnétique de position et des moyens magnétiques de retour tactile.

### RÉSUMÉ DE L'INVENTION

La présente invention a pour but de proposer un codeur incrémental répondant à l'ensemble des besoins précités (compacité, capacité d'effectuer des multi-tours en rotation et/ou une course linéaire, capacité d'incrémentation et de crantage, etc.), tout en présentant des fonctions de crantage et de détection (codage) sans friction et sans usure, un nombre de pièces limité, un montage simplifié et des risques diminués de blocage et de décalage.

A cet effet, l'invention concerne un codeur magnétique incrémental comme défini par la revendication 1, définissant un axe de codeur et comprenant un corps fixe et un corps mobile par rapport au corps fixe selon au moins une première direction de codage correspondant à une translation le long de l'axe de codeur selon une longueur de course en translation prédéterminée, le corps mobile étant mobile par rapport au corps fixe selon en outre une deuxième direction de codage perpendiculaire à la première direction de codage et correspondant à une rotation autour de l'axe de codeur.

L'un des corps, dit premier corps, comprend:
- un premier anneau s'étendant selon une première direction longitudinale confondue avec l'axe de codeur et une première direction circonférentielle perpendiculaire à la première direction longitudinale, la première direction longitudinale correspondant à la première direction de codage, le premier anneau définissant une alternance magnétique selon la première direction de codage;
- un deuxième anneau s'étendant selon une deuxième direction longitudinale confondue avec l'axe de codeur et une deuxième direction circonférentielle perpendiculaire à la deuxième direction longitudinale, la deuxième direction circonférentielle correspondant à la deuxième direction de codage, le deuxième anneau définissant une alternance magnétique selon la deuxième direction de codage.

L'autre corps, dit deuxième corps, comprend:
- au moins une première dent de crantage en matériau ferromagnétique ou magnétique disposée en regard du premier anneau pour créer un crantage lors d'un mouvement du corps mobile selon la première direction de codage;
- une première paire de détecteurs magnétiques disposés en regard du premier anneau et configurés pour quantifier chaque mouvement du corps mobile selon la première direction de codage;
- au moins une deuxième dent de crantage en matériau ferromagnétique ou magnétique disposée en regard du deuxième anneau pour créer un crantage lors d'un mouvement du corps mobile selon la deuxième direction de codage; et
- une deuxième paire de détecteurs magnétiques disposés en regard du deuxième anneau et configurés pour quantifier chaque mouvement du corps mobile selon la deuxième direction de codage.

Muni de ces caractéristiques, le codeur selon l'invention permet en effet de mettre en oeuvre un codage selon l'une des directions choisies, par exemple parmi la direction de translation et la direction de rotation, tout en assurant un crantage selon la même direction. Selon l'invention, le codage et le crantage sont créés par le même effet magnétique entre le corps mobile et le corps fixe.

Ainsi, l'arrangement de ces deux corps peut être choisi de sorte à minimiser leur contact mécanique. Par exemple, les éléments détaillés ci-dessus du corps fixe et du corps mobile ne présentent aucun contact entre eux. Ainsi, ces éléments fonctionnent sans friction et sans usure mécanique prématurée. Cela garantit donc la fiabilité à l'usage du codeur et rallonge considérablement sa durée de vie même lorsque des pièces en plastique sont utilisées. De plus, ces éléments sont en nombre limité ce qui permet de les disposer facilement au sein des corps correspondants.

Cela fait alors le montage du codeur particulièrement simple et diminue les risques de blocage et de décalage de différentes pièces entre elles.

Grâce à ces caractéristiques, il est possible de mettre en oeuvre le codage et le crantage par le codeur magnétique selon l'invention, selon deux directions de codage différentes. Ainsi, il est possible par exemple de mettre en oeuvre le codage et le crantage dans la direction de rotation et de translation simultanément. Une telle application correspond notamment à une application conventionnelle d'un codeur dans le cockpit d'un aéronef.

De plus, le codage et le crantage selon les deux directions précitées sont mis en oeuvre en utilisant le même phénomène physique, à savoir le magnétisme, qui permet d'éviter les contacts et donc les frottements entre différentes pièces et par conséquent, leur usure prématurée. Ainsi, les avantages précités par rapport à une seule direction de codage peuvent être appliqués également aux deux directions de codage.

Selon encore d'autres modes de réalisation, le codeur selon l'invention présente plus que deux directions de codage et avantageusement, de crantage.

Selon certains modes de réalisation, les dents de crantage sont reliées rigidement entre elles par une pièce de raccordement, avantageusement faite d'un matériau ferromagnétique ou magnétique.

Ces caractéristiques permettent d'améliorer l'efficacité du codeur. En particulier, cela permet d'augmenter le couple et la force de crantage sans augmenter la taille des dents de crantage. Ainsi, il est possible d'éviter les fuites du champ magnétique et les émissions parasites externes.

Dans certains modes de réalisation, la première direction de codage correspond à une translation le long de l'axe de codeur selon une longueur de course en translation prédéterminée et la deuxième direction de codage correspond à une rotation autour de l'axe de codeur.

Muni de ces caractéristiques, le codeur selon l'invention peut être utilisé de manière conventionnelle dans le cockpit d'un aéronef.

Selon certains modes de réalisation, l'étendue longitudinale du deuxième anneau est choisie de sorte que le champ magnétique vu par le ou chaque deuxième dent de crantage et par la deuxième paire de détecteurs magnétiques est sensiblement constant sur toute la longueur de course en translation.

Selon ces caractéristiques, le champ magnétique vu par la ou chaque dent associée à l'anneau de rotation ainsi que par la paire de détecteurs correspondants soit sensiblement constant à un angle de rotation donné et sur toute la longueur de course en translation du codeur noté Ct. Si chaque deuxième dent de crantage est centrée sur l'anneau correspondant, alors la longueur Ct est égale à deux fois la longueur de course dans chaque direction. Par conséquent, la détection et le crantage en rotation et en translation peuvent être utilisés simultanément sans perte de performance du codeur.

De manière générale, la formule suivante doit être respectée : L2 ≥ Ldr + Ct où L2 désigne l'étendue longitudinale du deuxième anneau et Ldr l'étendue longitudinale de la ou de chaque deuxième dent de crantage. Dans le cas où l'étendue longitudinale des premières et deuxièmes dents de crantage sont sensiblement égales, l'étendue longitudinale du deuxième anneau est sensiblement supérieure à celle du premier anneau. En effet, si on considère que L1 ≈ Ldt + Ct (Ldt désignant l'étendue longitudinale de la ou de chaque première dent de crantage) et Ldt = Ldr, alors L2 ≥ L1.

Selon certains modes de réalisation, le premier anneau définit au moins un cran central et deux crans périphériques, une position stable en translation étant définie lorsque la première dent de crantage est disposée en regard du cran central.

Grâce à ces caractéristiques, il est possible d'atteindre les fonctions du type push/pull dans le sens de translation du codeur selon l'invention. En particulier, ces caractéristiques permettent d'avoir une position stable lorsque la dent de crantage associée à l'anneau de translation est positionnée face au cran central. Une telle position stable est atteinte sans utilisation des moyens mécaniques de rappel, tels que des ressorts ou d'autres éléments élastiques. Ainsi, il est possible d'éviter de frottements parasites lors du fonctionnement du codeur.

Il est donc possible pour l'opérateur d'appuyer sur le codeur ou alors de tirer celui-ci, tout en permettant d'introduire des informations en faisant une rotation dans l'une des positions précitées de ce codeur.

Selon certains modes de réalisation, l'alternance magnétique du ou de chaque anneau) définit un pas de crantage constant.

Muni de ces caractéristiques, le ou chaque anneau peut être fabriqué de manière simple. De plus, cela crée des crantages homogènes tout au long du mouvement du codeur selon la direction correspondante.

Selon certains modes de réalisation, la surface de la ou de chaque dent de crantage présente une étendue inférieure ou égale au pas de crantage de l'anneau correspondant.

Muni de ces caractéristiques, le nombre de dents peut ainsi être augmenté jusqu'à atteindre le nombre d'alternances magnétiques des anneaux. Cela permet alors d'optimiser l'effort de crantage.

Dans certains modes de réalisation, les détecteurs magnétiques d'une même paire de détecteurs sont décalés l'un de l'autre d'une fraction du pas de crantage de l'anneau correspondant.

Grâce à ces caractéristiques, il est possible de détecter le sens de mouvement du codeur selon la direction de codage correspondante. Par exemple, lorsqu'il s'agit de la direction de rotation, un tel arrangement des détecteurs permet de détecter le sens de rotation du codeur. Lorsqu'il s'agit de la direction de translation, un tel arrangement des détecteurs permet de détecter le sens de mouvement en translation du codeur.

Selon certains modes de réalisation, le deuxième corps comprend pour au moins un anneau, une pluralité de dents de crantage en matériau ferromagnétique ou magnétique disposée en regard de cet anneau pour créer un crantage lors d'un mouvement du corps mobile selon la direction de codage correspondante ;
avantageusement, lesdites dents de crantage étant réparties de manière équidistante selon la direction circonférentielle correspondante.

Une pluralité de dents de crantage associée à un même anneau permet d'augmenter la force et/ou le couple de crantage. Il est ainsi possible d'atteindre le couple de force souhaité lors du crantage. De plus, lorsque ces dents sont réparties de manière équidistante, il est possible de rendre cet effort et/ou ce couple homogène lors de chaque crantage.

Selon certains modes de réalisation, comprenant en outre une butée de course pour la ou chaque direction de codage.

Muni de ces caractéristiques, il est possible d'assurer une butée selon la ou chaque direction de codage du codeur.

Selon certains modes de réalisation, le premier corps est le corps mobile et le deuxième corps est le corps fixe.

Le ou chaque anneau est présent dans le corps mobile alors que la ou chaque dent ainsi que la ou chaque paire de détecteurs magnétiques sont présentes dans le corps fixe. Cela est avantageux dans la mesure où les câbles électriques issus notamment des détecteurs magnétiques restent fixes. Cela évite un câblage compliqué qui est généralement coûteux et présente des risques d'usure et de coupure du signal.

Selon certains modes de réalisation, le corps fixe est destiné à être fixé devant un panneau formant un tableau de bord et le corps fixe est englobé au moins partiellement par le corps mobile.

Grâce à ces caractéristiques, le codeur selon l'invention peut être fixé de manière particulière simple par exemple sur une planche de bord du cockpit d'un aéronef.

Selon certains modes de réalisation, le corps fixe est destiné à être fixé derrière un panneau formant un tableau de bord et le corps fixe englobe au moins partiellement par le corps mobile.

Grâce à ces caractéristiques, le codeur selon l'invention peut être disposé de manière compacte par exemple dans le cockpit d'un aéronef car seule la partie mobile fait saillie par rapport au panneau formant la planche de bord.

Selon certains modes de réalisation, comprenant en outre un bouton destiné à être orienté vers un opérateur ;
ledit bouton comprenant au moins un élément fonctionnel choisi dans la liste comprenant :
- un élément de retour visuel ;
- un capteur de présence ;
- un actionneur haptique.

Grâce à ces caractéristiques, il est possible d'assurer un certain nombre de fonctionnalités supplémentaires du codeur. Par exemple, il est possible de mettre en oeuvre un retour visuel indiquant par exemple à l'opérateur l'état courant du codeur ou toute autre information utile, telle que par exemple la fonction affectée au codeur.

Grâce au capteur de présence il est possible par exemple d'activer des fonctions complémentaires du codeur en détectant la position des doigts sur le bouton. Par exemple, les fonctionnalités du codeur peuvent différer en fonction du nombre de doigts posés sur le bouton.

Grâce à un actionneur haptique il est possible d'améliorer le ressenti haptique par l'utilisateur.

Selon certains modes de réalisation, le codeur comprend en outre un contrôleur des crantages complémentaire comprenant une bobine électromagnétique solidaire de l'un des corps et configurée pour agir sur au moins une dent de crantage et/ou un élément ferromagnétique ou magnétique solidaire de l'autre corps.

Grâce à ces caractéristiques, il est possible d'augmenter l'effort et le couple de crantage ressentis par l'opérateur.

### DESCRIPTION DES FIGURES

Ces caractéristiques et avantages de l'invention apparaitront à la lecture de la description qui va suivre donnée uniquement à titre d'exemple et non limitatif, et faite en référence aux dessins annexés, sur lesquels :
- [Fig.1] la figure 1 est une vue schématique en perspective d'un codeur magnétique selon un premier mode de réalisation de l'invention, le codeur étant fixé partiellement derrière un panneau formant une planche de bord ;
- [Fig.2] la figure 2 est une vue en perspective éclatée du codeur de la figure 1 ;
- [Fig.3] la figure 3 présente une vue partielle d'une coupe selon le plan longitudinal III de la figure 1 et de trois autres coupes le long de l'axe de codeur de la figure 1 ;
- [Fig.4] la figure 4 est une vue en perspective des éléments internes fonctionnels du corps fixe et du corps mobile de la figure 1, ces éléments comprenant notamment un anneau de translation, un anneau de rotation, une pluralité de dents de crantage et deux paires de détecteurs magnétiques ;
- [Fig.5] la figure 5 est une vue schématique en perspective de l'anneau de translation de la figure 4 ;
- [Fig.6] la figure 6 est un diagramme de rayonnement magnétique en fonction de différents exemples d'arrangement des anneaux élémentaires de l'anneau de translation de la figure 5 ;
- [Fig.7] la figure 7 est une vue schématique en perspective de l'anneau de rotation de la figure 4 ;
- [Fig.8] la figure 8 est un diagramme de rayonnement magnétique selon différents exemples d'arrangement des éléments formant l'anneau de rotation de la figure 7 ;
- [Fig.9] la figure 9 est une vue schématique en perspective des dents de crantage et des paires de détecteurs magnétiques de la figure 4 ;
- [Fig.10] la figure 10 est un diagramme illustrant le fonctionnement d'une paire de détecteurs magnétiques de la figure 9 avec un effort de crantage ;
- [Fig.11] la figure 1 1 est une vue en perspective éclatée du codeur de la figure 1 dans lequel un contrôleur de crantage complémentaire a été rajouté ;
- [Fig.12] la figure 12 est une vue schématique en perspective d'un codeur selon un deuxième mode de réalisation de l'invention, le codeur étant fixé sur un panneau formant une planche de bord tout en restant devant ce panneau ;
- [Fig.13] la figure 13 est une vue en perspective éclatée du codeur de la figure 12 ;
- [Fig.14] la figure 14 présente une vue partielle d'une coupe selon le plan longitudinal XIV de la figure 12 et de trois autres coupes le long de l'axe de codeur de la figure 12 ;
- [Fig.15] la figure 15 est une vue schématique en perspective d'un exemple d'arrangement des éléments internes fonctionnel du corps fixe et du corps mobile du codeur de la figure 12 ;
- [Fig.16] la figure 16 présente une vue partielle d'une coupe selon le plan longitudinal XVI du codeur de la figure 12 et d'une autre coupe le long de l'axe de codeur de la figure 12, le codeur comprenant au moins un élément fonctionnel supplémentaire.

### DESCRIPTION DÉTAILLÉE DE L'INVENTION

### PREMIER MODE DE RÉALISATION

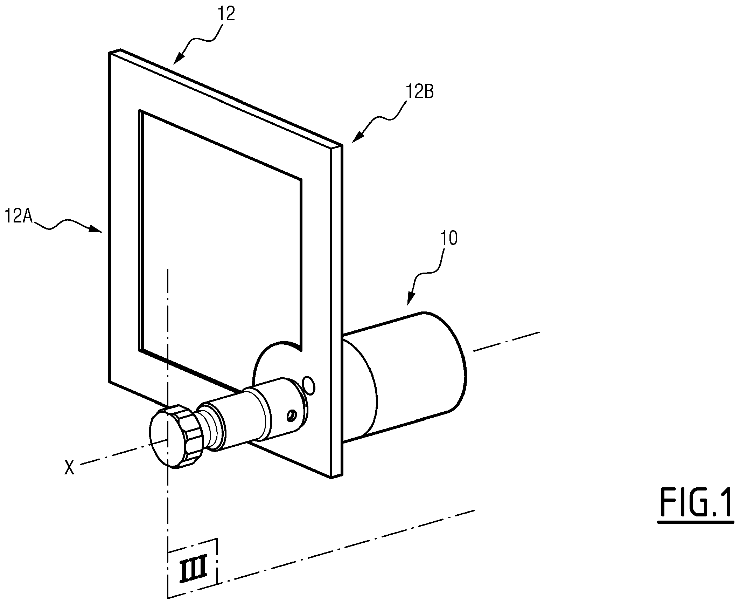

La figure 1 illustre en effet un codeur magnétique incrémental 10 selon un premier mode de réalisation de l'invention. De préférence, le codeur 10 est monté dans un cockpit permettant de piloter un aéronef.

Par « aéronef », on entend tout engin volant, tel qu'un avion, un hélicoptère ou un drone par exemple. Un tel aéronef peut être piloté directement à partir de celui-ci. Dans un tel cas le cockpit est avantageusement arrangé à l'intérieur de l'aéronef. Selon un autre exemple de réalisation, un tel aéronef est contrôlé à distance. Dans un tel cas, le cockpit est disposé à distance de l'aéronef et présente par exemple une station au sol. Dans tous les cas, l'aéronef est configuré pour être piloté par un opérateur, par exemple par un pilote à partir du cockpit disposé à l'intérieur de l'aéronef.

Selon l'invention, le codeur 10 permet à l'opérateur de contrôler au moins une fonctionnalité avionique. Par exemple, un tel codeur 10 peut être utilisé par l'opérateur pour contrôler un système avionique et fait partie d'un système de contrôle d'un tel système avionique. En variante, le codeur 10 fait partie d'un système de contrôle de plusieurs systèmes avioniques. Par exemple, le codeur 10 selon l'invention fait partie d'un système dit « Flight Control Unit » (FCU) ou « Integrated Standby Instrument System » (ISIS) ou « Closer Control Device » (CCD) ou « Keyboard Cursor Control Device » (KCCD), etc.

Dans l'exemple de la figure 1, le codeur 10 est intégré partiellement dans un panneau 12. Ce panneau 12 forme par exemple une planche de bord du cockpit de l'aéronef pour l'un des systèmes de contrôle précité. Dans l'exemple de la figure 1, le codeur 10 est arrangé partiellement dans la partie avant 12A du panneau 12 et partiellement dans la partie arrière 12B de ce panneau 12. En particulier, dans l'exemple de la figure 1, la partie avant 12A du panneau 12 est orientée vers l'opérateur alors que la partie arrière 12B de ce panneau est orientée vers la partie interne de la planche de bord. Bien entendu, d'autres exemples d'arrangement du codeur 10 par rapport au panneau 12 ou par rapport à tout autre moyen de fixation sont également possibles.

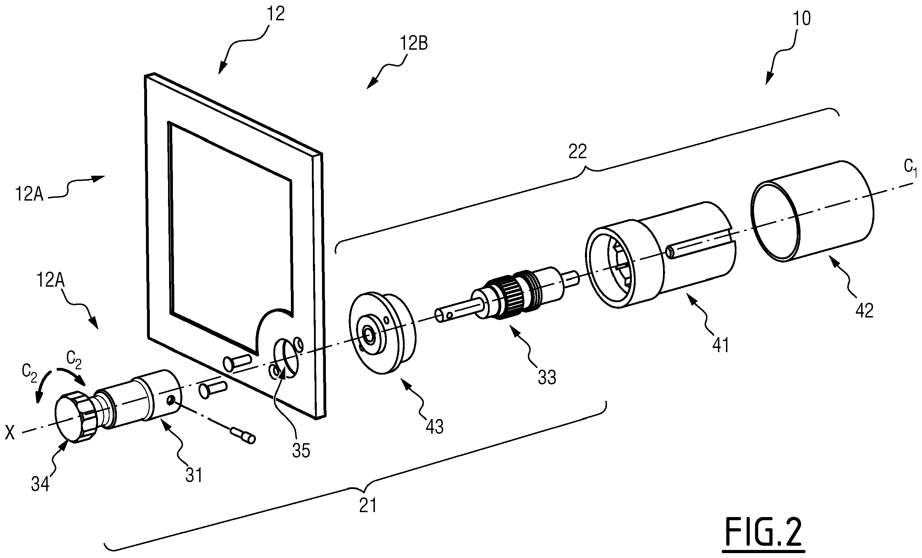

En référence à la figure 2, le codeur 10 comprend un corps mobile 21, appelé également dans l'exemple de cette figure premier corps, et un corps fixe 22, appelé également dans l'exemple de cette figure deuxième corps.

Le corps mobile 21 comprend un bouton 31 et un rotor 33.

Le bouton 31 fait saillie par rapport au panneau 12 et est arrangé dans la partie avant 12A de ce panneau 12. Le bouton 31 est mobile en translation le long d'un axe de codeur X et en rotation autour de l'axe de codeur X. Plus particulièrement, le bouton 31 est mobile selon une première direction de codage C1 qui correspond dans cet exemple à la direction de translation selon l'axe de codeur X et une deuxième direction de codage C2 qui correspond dans cet exemple à la direction de rotation autour de l'axe de codage X. Avantageusement, le bouton 31 est mobile dans chaque sens selon chaque direction de codage C1, C2. En particulier, dans la direction de rotation, le bouton 31 est mobile en rotation dans le sens horaire et antihoraire, et dans la direction de translation, le bouton 31 est mobile dans le sens vers la planche de bord et vers l'opérateur. Avantageusement, le bouton 31 définit notamment une surface de bouton 34 qui est destinée à être orientée vers l'opérateur. Cette surface 34 représente donc une surface extérieure du bouton 31 qui est visible par l'opérateur et peut être saisie par l'opérateur.

Le rotor 33 s'étend selon l'axe de codeur X de sorte à former sur l'une de ses extrémités une liaison solidaire avec le bouton 31. Ainsi, tout comme le bouton 31, le rotor 33 est mobile selon la première direction de codage C1 et selon la deuxième direction de codage C2 dans chaque sens de mouvement précité. Le rotor 33 reçoit des éléments internes fonctionnels du corps mobile 21 qui seront expliqués plus en détail par la suite.

Le corps fixe 22 comprend un support 41, un capot 42 et une flasque 43.

La flasque 43 est par exemple disposée dans un trou passant 35 du panneau 12 et permet de supporter le bouton 31 et le rotor 33. Dans l'exemple de la figure 2, la flasque 43 est fixée sur le panneau 12 tout en restant dans la partie arrière 12B de celui-ci, en utilisant par exemple des vis accessibles à partir de la partie avant 12B du panneau 12.

Le support 41 reçoit des éléments internes fonctionnels du corps fixe 22 qui sont destinés à coopérer avec les éléments internes fonctionnels du corps mobile 21 comme cela sera expliqué plus en détail par la suite. En particulier, et comme cela sera apparent par la suite, les éléments internes fonctionnels du corps fixe 22 sont maintenus par le support 41 à distance par rapport à ceux du corps mobile 21. Pour ce faire, le support 41 est configuré pour recevoir au moins partiellement le rotor 33 avec les éléments internes fonctionnels du corps mobile 21 portés par ce rotor 33.

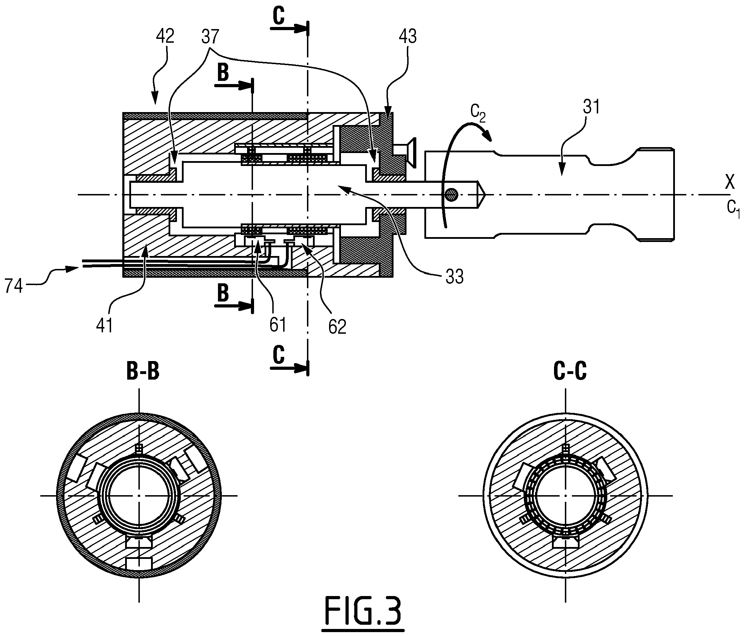

Le support 41 est par exemple relié au corps mobile 21 via une liaison mobile dans chaque direction de codage. Cette liaison peut par exemple être formée à chaque extrémité du rotor 33 et présenter des paliers lisses, par exemple des paliers en polymère ou paliers bronze frittés. Ces paliers sont préférentiellement à collerette pour servir de butée mécanique. Selon un autre exemple, ces paliers sont des paliers à élément roulant tel que douille à billes. La figure 3 fait notamment apparaitre les paliers 37 reliant le rotor 33 au deuxième corps 22. Dans l'exemple de cette figure, les paliers 37 relient une extrémité du rotor 33 directement au support 41 et l'autre extrémité du rotor 33 au support 41 via la flasque 43. Dans cet exemple, la flasque 43 est configurée pour coopérer avec le support 41 afin de le fixer au panneau 12

Le capot 42 est destiné à protéger l'ensemble des composants du codeur 10 qui sont disposés dans la partie arrière 12B du panneau 12.

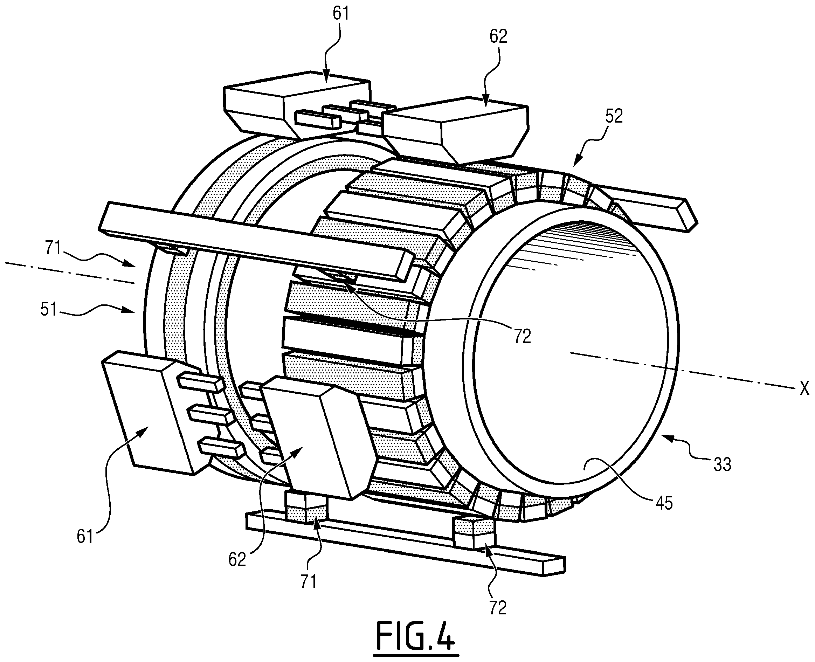

Dans l'exemple de la figure 4 illustrant plus en détail les éléments internes fonctionnels du corps fixe 22 et du corps mobile 21, le rotor 33 présente par exemple un arbre 45 creux de forme cylindrique s'étendant selon l'axe de codeur X.

En référence à cette figure 4, les éléments internes fonctionnels du corps mobile 21 comprennent un premier anneau 51, dit anneau de translation, et un deuxième anneau 52, dit anneau de rotation. Chacun de ces anneaux 51, 52 est fixé sur l'arbre 45 le long de l'axe de codeur X et reste espacé de l'autre anneau 51, 52. En outre, chacun de ces anneaux 51, 52 présente une alternance magnétique axiale dans le cas de l'anneau de translation 51 et circonférentielle dans le cas de l'anneau de rotation 52.

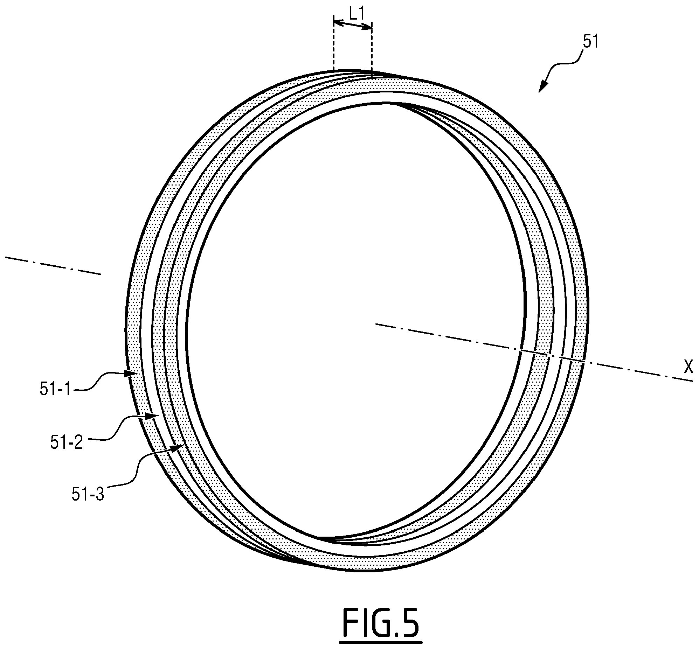

La figure 5 illustre plus en détail l'anneau de translation 51. Ainsi, en référence à cette figure 5, l'anneau de translation 51 s'étend selon l'axe de codeur X et présente une pluralité d'anneaux élémentaires 51-1, 51-2, 51-3 disposés l'un à côté de l'autre, par exemple par collage. Chaque anneau élémentaire 51-1, 51-2, 51-3 est par exemple réalisé en un seul bloc ou à partir de plusieurs aimants parallélépipédiques ou d'aimants en arc de cercle. Un tel anneau élémentaire peut également être issu d'un « polyaimants » ou d'un « aimant programmable » nommé Polymagnets^{®}.

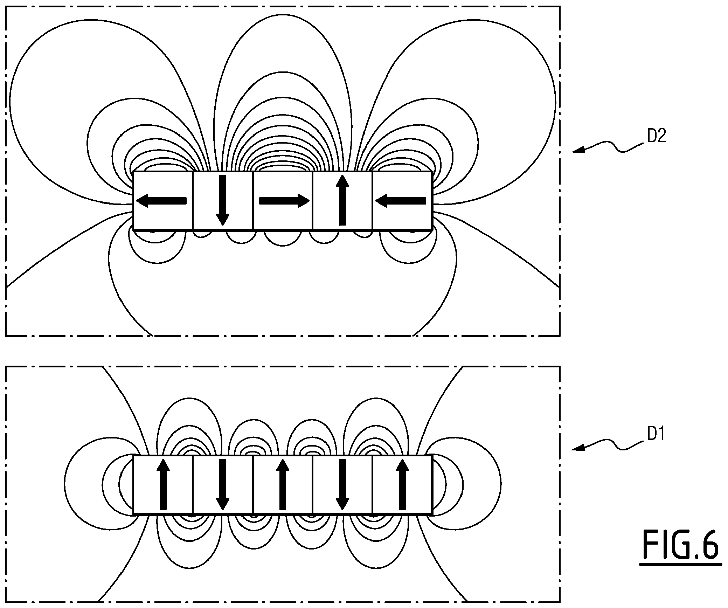

Afin d'atteindre une alternance magnétique axiale, dans l'exemple de la Figure 5, ces anneaux élémentaires 51-1, 51-2, 51-3 présentent une aimantation radiale et sont disposés l'un à côté de l'autre de sorte que les anneaux adjacents soient magnétisés dans les sens opposés selon la direction radiale. Cette disposition des anneaux élémentaires forme un diagramme D1 des flux magnétiques illustré sur la figure 6 dans le cas de cinq anneaux élémentaires.

Selon un autre exemple de disposition possible, une alternance magnétique axiale est atteinte en utilisant un arrangement de type Halbach dont un diagramme D2 des flux magnétiques est illustré également sur la figure 6. En particulier, selon un tel type d'arrangement, les anneaux élémentaires sont magnétisés alternativement selon la direction radiale et circonférentielle. Par ailleurs, le sens de la magnétisation de chaque anneau élémentaire est choisi de sorte à concentrer le champ magnétique sur la surface de l'anneau de translation 51 en regard des éléments internes fonctionnels du corps fixe 22. Dans l'exemple de l'arrangement respectif du corps mobile 21 et du corps fixe 22 de la figure 4, un tel champ magnétique est concentré sur la surface extérieure de l'anneau de translation 51.

L'anneau de translation 51 présente une largeur L1 correspondant à son étendue selon l'axe de codeur X. Cette largeur L1 est formée d'une somme des largeurs des anneaux élémentaires 51-1, 51-2, 51-3 formant cet anneau de translation 51. La largeur de chaque anneau élémentaire forme un pas de crantage en translation. Selon un exemple de réalisation, les anneaux élémentaires présentent une même largeur. Dans un tel cas, l'anneau de translation 51 présente un pas de crantage en translation homogène.

Dans l'exemple de la figure 5, trois anneaux élémentaires 51-1, 51-2, 51-3 sont arrangés successivement le long de l'axe de codeur X. Parmi ces anneaux élémentaires 51-1, 51-2, 51-3, l'anneau élémentaire 51-2 est disposé entre les anneaux élémentaires 51-1, 51-3. L'anneau élémentaire 51-2 est alors appelé anneau central et les anneaux élémentaires 51-1, 51-3 sont appelés anneaux périphériques. L'anneau central présente alors un cran central et les anneaux périphériques présentent des crans périphériques.

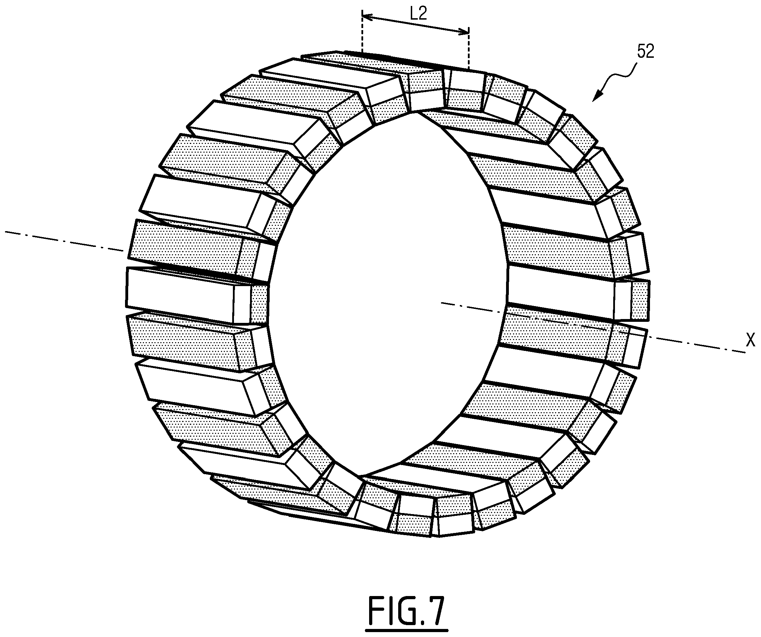

L'anneau de rotation 52 est illustré plus en détail sur la figure 7. Ainsi, et comme cela est visible sur cette figure 7, l'anneau de rotation 52 s'étend également selon l'axe de codeur X et présente une largeur L2 correspondant à son étendue longitudinale. Avantageusement, selon l'invention, la largeur L2 est supérieure à la largeur L1 de l'anneau 51 de translation, notamment lorsque les étendues longitudinales de toutes les dents de crantage (expliquées ci-dessous) sont sensiblement identiques. L'anneau de rotation 52 est par exemple de même diamètre que l'anneau de translation 51.

L'alternance magnétique circonférentielle de l'anneau de rotation 52 est atteinte par une disposition particulière d'une pluralité de pièces élémentaires formant cet anneau de rotation 52, chaque pièce élémentaire présentant par exemple un aimant permanent. Chaque pièce élémentaire peut par exemple présenter une forme sensiblement parallélépipédique qui est allongée selon l'axe de codeur X. Cette forme peut par exemple être légèrement incurvée afin de former un arc de cercle autour de l'axe de codeur X. Les pièces élémentaires sont disposées l'une à côté de l'autre par exemple par collage selon la direction circonférentielle. L'étendue circonférentielle de chaque pièce élémentaire forme un pas de crantage en rotation. Il s'agit d'un pas de crantage en rotation homogène lorsque l'ensemble des pièces élémentaires présentent une même étendue circonférentielle. Comme dans le cas des anneaux élémentaires, chaque pièce élémentaire est par exemple réalisée en un seul bloc ou à partir de plusieurs aimants parallélépipédiques ou d'aimants en arc de cercle. Une telle pièce élémentaire peut également être issue d'un « polyaimants » ou d'un « aimant programmable » nommé Polymagnets^{®}.

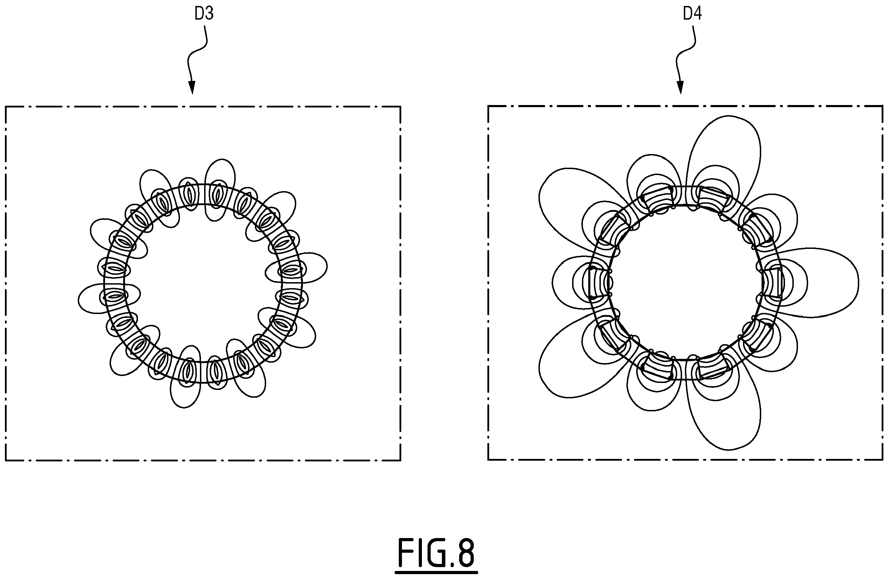

Dans l'exemple de la figure 7, les pièces élémentaires présentent une aimantation radiale et sont disposés l'une à côté de l'autre de sorte que les pièces élémentaires adjacentes soient magnétisées dans les sens opposés selon la direction radiale. Cette disposition des pièces élémentaires forme un diagramme D3 des flux magnétiques illustré sur la figure 8.

Selon un autre exemple de disposition possible, une alternance magnétique circonférentielle est atteinte en utilisant un arrangement de type Halbach dont un diagramme D4 des flux magnétiques est illustré également sur la figure 8. En particulier, selon un tel type d'arrangement, les pièces élémentaires sont magnétisées alternativement selon la direction radiale et circonférentielle. Par ailleurs, comme dans le cas précédent, le sens de la magnétisation de chaque pièce élémentaire est choisi de sorte à concentrer le champ magnétique sur la surface de l'anneau de rotation 52 en regard des éléments internes fonctionnels du corps fixe 22. Dans l'exemple de l'arrangement respectif du corps mobile 21 et du corps fixe 22 de la figure 4, un tel champ magnétique est concentré sur la surface extérieure de l'anneau de rotation 52.

Revenant à la description de la figure 4, les éléments internes fonctionnels du corps fixe 22 comprennent une paire de détecteurs magnétiques de translation 61 appelés également premiers détecteurs magnétiques, une paire de détecteurs magnétiques de rotation 62, appelés également deuxièmes détecteurs magnétiques, une pluralité de dents de crantage en translation 71, appelées également premières dents de crantage, et une pluralité de dents de crantage en rotation 72, appelées également deuxièmes dents de crantage. Dans l'exemple de cette figure 4, ces éléments 61, 62, 71, 72 sont fixés sur une surface intérieure du support 41 (non-représenté sur la figure 4) du corps fixe 22. En outre, comme mentionné précédemment, ces éléments 61, 62, 71, 72 sont maintenus à distance des anneaux 51 et 52 correspondants.

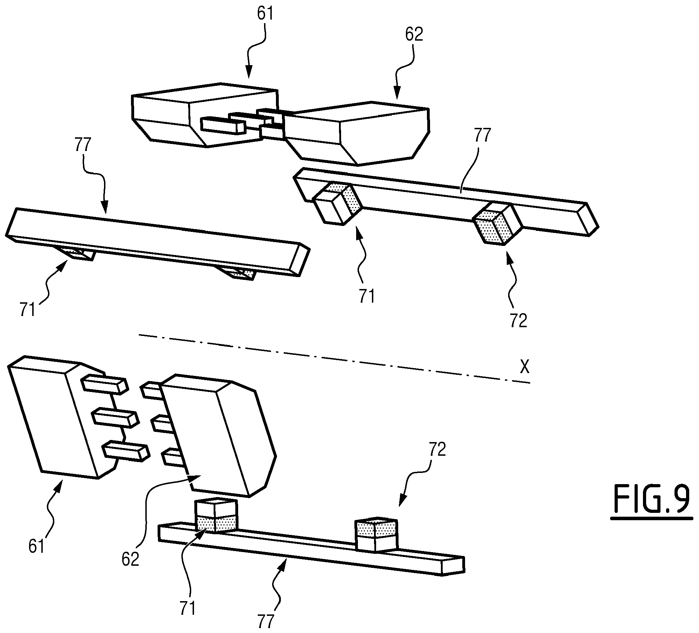

Les éléments 61, 62, 71, 72 sont visibles plus en détail sur la figure 9.

En particulier, la paire de détecteurs magnétiques de translation 61 est disposée en regard de l'anneau de translation 51 et permet de quantifier le déplacement de cet anneau 51 le long de l'axe de codeur X. Autrement dit, ces détecteurs 61 permettent de coder chaque déplacement de l'anneau de translation 51 le long de l'axe de codeur X en détectant des changements dans le flux magnétique grâce à l'alternance magnétique axiale des anneaux élémentaires constituant cet anneau de translation 51. Par exemple, les détecteurs 61 sont décalés l'un de l'autre d'une fraction du pas de crantage en translation défini par cet anneau de translation 51.

La paire de détecteurs magnétiques de rotation 62 est disposée en regard de l'anneau de rotation 52. Les détecteurs 62 permettent de quantifier chaque mouvement rotatif de l'anneau de rotation 52 autour de l'axe de codeur X en détectant des changements dans le flux magnétique grâce à l'alternance magnétique circonférentielle mise en oeuvre par les pièces élémentaires constituant l'anneau de translation 52. Par exemple, les détecteurs magnétiques 62 sont décalés d'une fraction du pas de crantage en rotation défini par l'anneau de rotation 52.

Chaque détecteur magnétique de chaque paire présente par exemple un capteur à effet Hall ou un capteur magnéto-résistif ou un solénoïde. En outre, chaque détecteur magnétique 61, 62 est relié à un contrôleur externe du codeur 10 par des câbles 74 visibles sur la figure 3.

Selon un exemple de réalisation, le codeur magnétique 10 et en particulier le corps fixe 22, présente une pluralité de paires de détecteurs magnétiques pour au moins l'une des directions de codage. Par exemple, le détecteur 10 peut comprendre deux ou trois paires de détecteurs magnétiques de translation et/ou de rotation. Le doublement, voire le triplement de détecteurs magnétiques permet d'améliorer la fiabilité du dispositif.

Chaque dent de crantage en translation 71 est disposée en regard de l'anneau de translation 51. En particulier, chaque dent de crantage en translation 71 présente une surface qui est orientée vers l'anneau de translation 51 et présente une dimension inférieure ou égale au pas de crantage en translation. Une telle surface présente par exemple une étendue longitudinale qui est inférieure ou égale au pas de crantage de cet anneau 51. En outre, chaque dent de crantage en translation 71 est faite d'un matériau ferromagnétique ou magnétique tel qu'inox série 400. Chaque dent de crantage en translation 71 est préférentiellement un aimant. Chaque dent de crantage en translation 71 est par exemple un aimant parallélépipédique ou un aimant en arc de cercle. Un tel aimant est par exemple issu d'un « polyaimants » ou d'un « aimant programmable » nommé Polymagnets^{®}.

Dans l'exemple de la figure 4, lorsque l'anneau de translation 51 est constitué d'un anneau élémentaire central 51-2 et deux anneaux élémentaires périphériques 51-1 et 51-2, chaque dent de crantage en translation 71 définit une position stable dans laquelle elle est disposée en regard de l'anneau élémentaire central 51-2. Pour assurer une telle position stable, chaque dent de crantage en translation 71 présente une magnétisation de sens opposé à celui de la surface extérieure de l'anneau élémentaire central 51-2.

Chaque dent de crantage en rotation 72 est disposée en regard de l'anneau de rotation 52. Comme dans le cas précédent, chaque dent de crantage en rotation 72 présente une surface orientée vers l'anneau de rotation 52 d'une dimension inférieure ou égale à celle du pas de crantage en rotation. En outre, chaque dent de crantage en rotation 72 est faite d'un matériau ferromagnétique ou magnétique tel qu'inox série 400. Chaque dent de crantage en rotation 72 est préférentiellement un aimant. Chaque dent de crantage en rotation 72 est par exemple un aimant parallélépipédique ou un aimant en arc de cercle. Un tel aimant est par exemple issu d'un « polyaimants » ou d'un « aimant programmable » nommé Polymagnets^{®}.

Comme cela est illustré sur la figure 9, les dents de crantage associées aux anneaux différents 51, 52 sont avantageusement reliées entre elles par une pièce de raccordement 77. Cette pièce de raccordement 77 est par exemple une pièce magnétique ou ferromagnétique, et s'étend avantageusement selon l'axe de codeur X.

Par ailleurs, dans l'exemple de la figure 9 une pluralité de dents de crantage 71, 72 est associée à chacun des anneaux 51, 52. Dans ce cas, au moins deux dents de crantage 72 participent en même temps au crantage en rotation, c'est-à-dire qu'un effort d'aimantation s'applique en même temps sur au moins deux dents de crantage en rotation 72. En particulier, dans l'exemple de cette figure, trois dents de crantage sont associées à chacun des anneaux. Avantageusement, selon l'invention, lorsqu'une telle pluralité de dents de crantage est associée à un anneau, les dents de crantage sont disposées de manière équidistante selon la direction circonférentielle de l'anneau 51, 52 correspondante. Il doit être également compris qu'une seule dent de crantage pour chaque anneau serait suffisante afin d'assurer une fonction de crantage selon la direction correspondante.

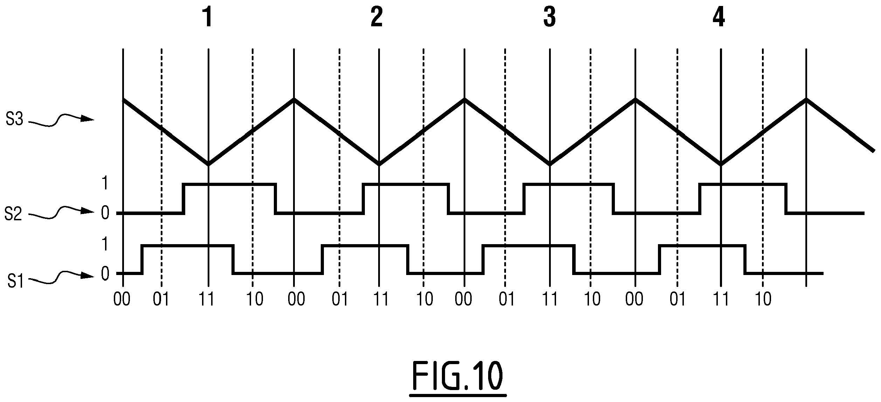

La figure 10 illustre un diagramme d'encodage effectué par une paire de détecteurs magnétiques de translation 61 ou de rotation 62. Selon ce diagramme, l'un des détecteurs magnétiques de cette paire délivre un signal vrai ou faux lors du mouvement de l'anneau correspondant. Ce signal est dénoté par la référence S1 sur la figure 10. L'autre détecteur délivre quant à lui un signal S2 qui est décalé par rapport au signal S1 selon une fraction du pas de crantage. Ce signal S2 est également composé de valeurs vraies et faux qui alternent alors avec le mouvement de l'anneau correspondant selon la direction correspondante. Finalement, la figure 10 fait également apparaitre un tracé S3 qui correspond à l'effort ou le couple de crantage assuré par une ou plusieurs dents de crantage lors du mouvement de l'anneau correspondant selon la direction correspondante. Ce tracé S3 est alors également périodique.

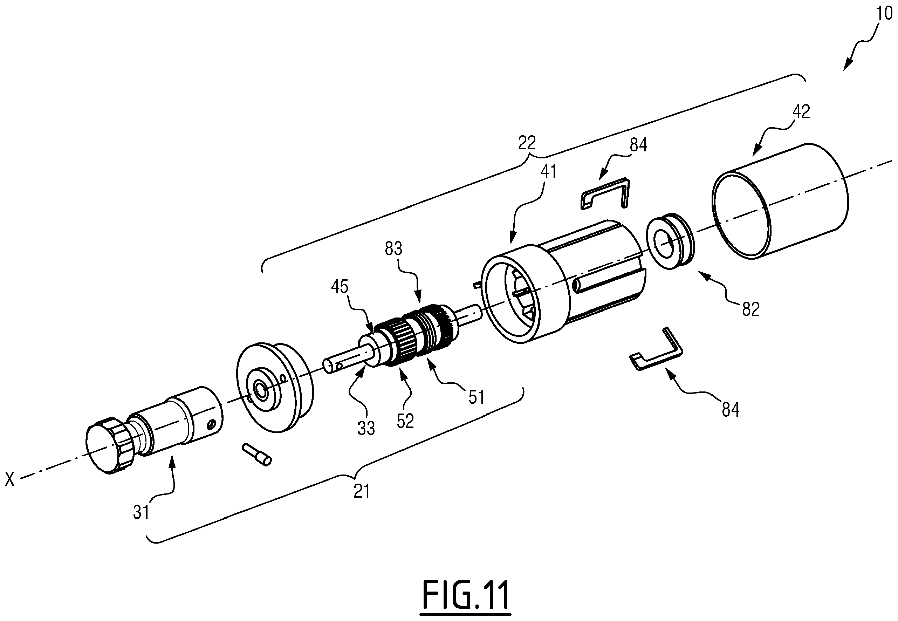

La figure 11 illustre un autre exemple de réalisation du codeur incrémental 10 selon le premier mode de réalisation. Selon cet exemple, le codeur 10 comprend un contrôleur des crantages complémentaire permettant de contrôler davantage l'effort ou le couple de crantage selon au moins l'une des directions de codage. Ce contrôleur comprend notamment une bobine magnétique 82 intégrée dans le corps fixe 22 et une roue dentée 83 intégrée dans le corps mobile 21. Par exemple, la bobine 82 est montée à l'intérieur du support 41 et la roue dentée 83 est montée sur rotor 33 tout comme les anneaux 51 et 52 précédemment décrits. Par exemple, la roue dentée 83 est montée selon le même axe de codeur X que les anneaux 51, 52.

La roue dentée 83 est faite d'un matériau ferromagnétique ou magnétique et est destinée à être disposée en regard de la bobine magnétique 84 lorsque le rotor 33 est reçu à l'intérieur du support 41. Tout comme les anneaux 51, 52, la roue dentée 83 est destinée à être espacée de la bobine 82.

La bobine magnétique 82 est adaptée pour créer un champ magnétique autour de la roue dentée 83. Ce champ magnétique est adapté pour créer un crantage lors du mouvement par exemple en rotation du bouton 31. Avantageusement, le nombre de dents de la roue dentée 83 est égal à un multiple du nombre de crans en rotation du codeur 10. En variante, ce champ magnétique est adapté pour créer un crantage lors du mouvement en translation du bouton 31.

La partie du rotor 33 recevant la roue dentée est notamment faite en matériau ferromagnétique ou magnétique. Par ailleurs, selon certains exemples de réalisation, le corps fixe 22 peut être complété d'une ou de plusieurs pièces ferromagnétiques ou magnétiques 84 permettant la fermeture magnétique avec la bobine magnétique 82.

Selon une variante, la roue dentée 83 est remplacée par toute autre pièce en matériau magnétique ou ferromagnétique sur laquelle la bobine magnétique 82 est apte à agir. Dans certains cas, le corps mobile 21 peut être dépourvu de telle pièce magnétique ou ferromagnétique. Dans un tel cas, la bobine 84 est configurée pour agir directement sur l'arbre 45 qui est par exemple dans ce cas est fait entièrement d'un matériau magnétique ou ferromagnétique. Encore en variante, la bobine 84 est adaptée pour agir directement sur au moins l'un des anneaux 51, 52. Ainsi, en adaptant le champ magnétique créé par la bobine 84, l'effort ou le couple de crantage peut être contrôlé selon au moins l'une des directions de codage.

### DEUXIEME MODE DE REALISATION.

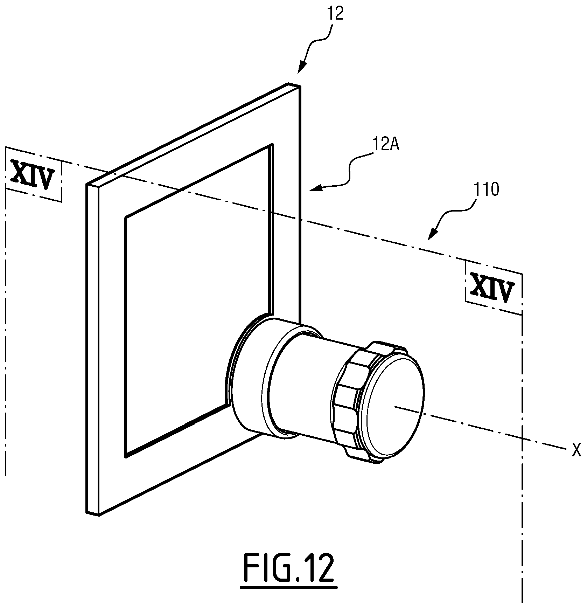

Le codeur 110 selon un deuxième mode de réalisation sera désormais expliqué en référence aux figures 12 à 16. L'application de ce codeur 110 est par exemple identique à celle du codeur 10 expliqué précédemment.

La différence principale du codeur 110 selon le deuxième mode de réalisation consiste en la manière de sa disposition par rapport au panneau 12. En effet, comme cela est illustré sur la figure 12, le codeur 110 selon le deuxième mode de réalisation est disposé entièrement dans la partie avant 12A du panneau 12.

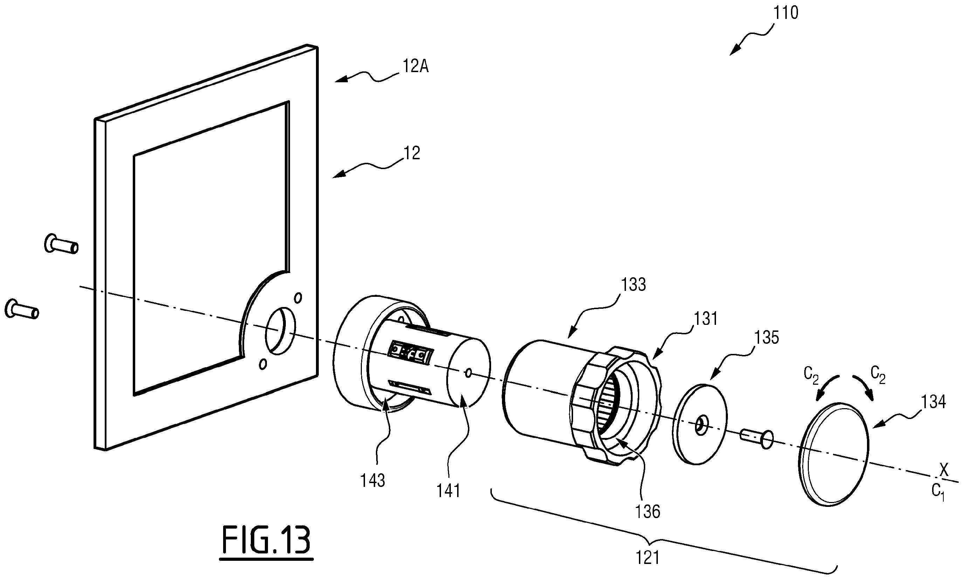

Comme cela est illustré sur la figure 13, tout comme le codeur 10 selon le premier mode de réalisation, le codeur 110 selon le deuxième mode de réalisation comprend un corps mobile 121, appelé également premier corps, et un corps fixe 122, appelé également deuxième corps.

Le corps fixe 122 est fixé par exemple directement sur la partie avant 12A du panneau 12. Comme dans le cas précédent, le corps fixe 122 comprend un support 141 recevant les éléments internes fonctionnels de ce corps fixe 122 comme cela sera expliqué plus en détail par la suite. Le support 141 peut comprendre en outre une butée mécanique 143 intégrée dans l'une de ses extrémités.

Comme dans le cas précédent, le corps mobile 121 comprend également un bouton 131 et un rotor 133 qui est par exemple solidaire avec le bouton 131 disposé sur son extrémité. La même extrémité du rotor 133 est par exemple fermée par un capot 134 présentant une surface orientée vers l'opérateur. Le capot 134 est relié au rotor 133. Une rondelle 135 est solidaire avec le corps fixe 122 à son extrémité. Cette rondelle 135 peut présenter une butée mécanique lors de la rotation ou de la translation du corps mobile 121. Cette butée mécanique peut être amortie via un ressort de rappel ou une pièce en élastomère (exemple de matériau : EPDM). Par ailleurs, cette butée peut être également magnétique. Dans ce cas, cette butée peut être réalisée en plaçant un aimant solidaire du corps fixe en en répulsion et au regard avec un aimant solidaire du corps mobile. Cette butée magnétique est intrinsèquement amortie. Cette butée magnétique peut être indépendante ou être une partie de l'un des anneaux 51, 52, 151 ou 152 (dans une logique d'optimisation du nombre de pièces). Par exemple, dans le cas d'un anneau du corps mobile utilisant un arrangement de type Halbach, illustré dans la figure 6, un aimant du corps fixe peut être placé en répulsion et au regard de l'extrémité de cette anneau ayant localement une aimantation axiale ou circonférentielle. En outre, à chacune de ses extrémités, le rotor 133 peut présenter des paliers 136 destinés à coopérer avec le corps fixe 122 afin d'assurer le mouvement du corps mobile 121 selon chacune des directions de codage, à savoir une première direction de codage C1 correspondant à la direction de translation le long de l'axe de codeur X et une deuxième direction de codage C2 correspondant à la direction de rotation autour de cet axe de codeur X, dans l'exemple des figures.

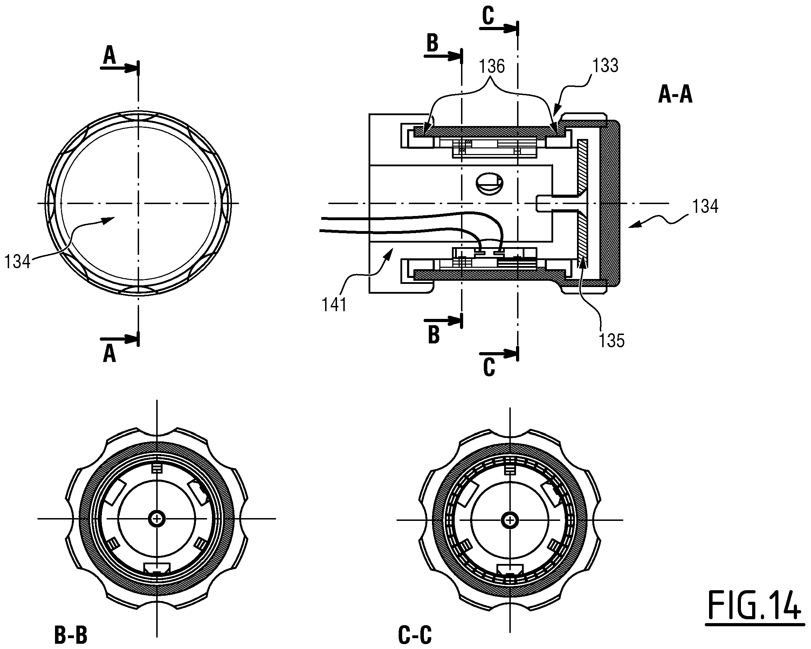

Contrairement au cas précédent, le rotor 133 est destiné à englober au moins partiellement le corps fixe 122. Autrement dit, le rotor 133 est destiné à être disposé autour du support 141 comme cela est visible sur la figure 14.

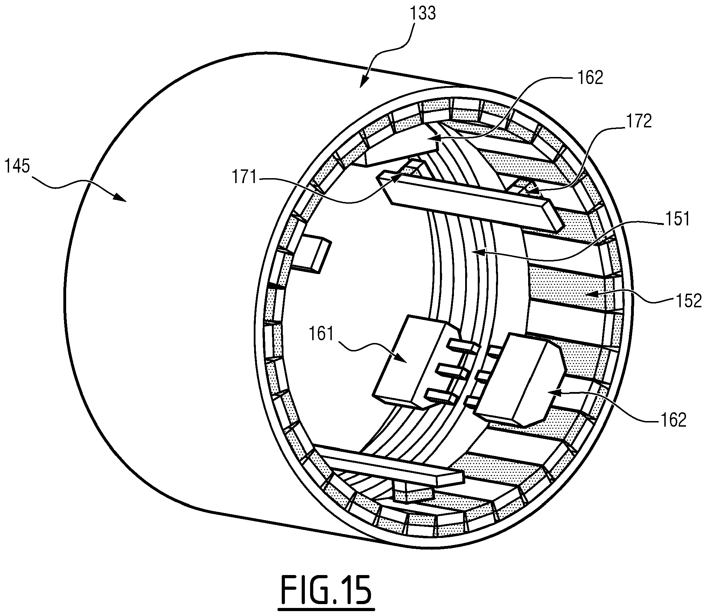

Comme cela est illustré sur la figure 15, tout comme dans le cas précédent, le corps mobile 121 comprend un anneau de translation 151, appelé également premier anneau, et un anneau de rotation 152, appelé également deuxième anneau. Ces anneaux sont similaires respectivement aux anneaux 51, 52 décrits précédemment. Contrairement au cas précédent, les anneaux 151, 152 selon le deuxième mode de réalisation sont disposés sur une surface intérieure du rotor 133 qui présente alors un arbre rotatif creux selon l'exemple de cette figure. Chacun de ces anneaux 151, 152 est fixé sur l'arbre 145 le long de l'axe de codeur X et reste espacé de l'autre anneau 151, 152.

Également de manière analogue au cas précédent, le corps fixe 122 comprend une pluralité de paires de détecteurs magnétiques 161, 162 et une pluralité de dents de crantage 171, 172. En particulier, comme dans le cas précédent, les paires de détecteurs magnétiques 161, 162 comprennent au moins une paire de détecteurs magnétiques de translation 161 disposés en regard de l'anneau de translation 151 et une paire de détecteurs magnétiques de rotation 162 disposés en regard de l'anneau de rotation 152. De manière analogue, les dents de crantage 171, 172 comprennent au moins une dent de crantage en translation 171 disposée en regard de l'anneau de translation 151 et une dent de crantage en rotation 172 disposée en regard de l'anneau de rotation 152. Avantageusement, de manière analogue au cas précédent, une pluralité de dents de crantage 171, 172 est associée à chacun des anneaux 151, 152. Dans ce cas, au moins deux dents de crantage 172 participent en même temps au crantage en rotation, c'est-à-dire qu'un effort d'aimantation s'applique en même temps sur au moins deux dents de crantage en rotation 172.

Contrairement au cas précédent, les éléments internes fonctionnels 161, 162, 171, 172, du corps fixe 122 du codeur 110 selon le deuxième mode de réalisation, sont disposée sur une surface extérieure du support 141. Ainsi, selon ce mode de réalisation, ces éléments sont disposés en regard des surfaces intérieures des anneaux 151, 152 correspondants. Autrement dit, selon ce mode de réalisation, les éléments internes fonctionnels du corps fixe 122 sont reçus à l'intérieur des anneaux 151, 152, tout en restant à distance par rapport à ceux-ci. Le fonctionnement et l'arrangement respectif de ces éléments internes 161, 162, 171, 172 sont analogues à ceux décrits précédemment en relation avec le premier mode de réalisation.

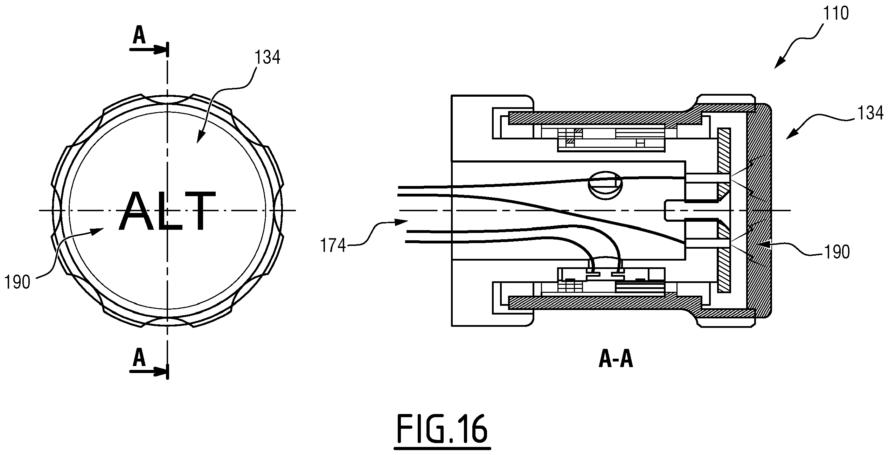

Finalement, en référence à la figure 16, le bouton 131 du corps mobile 121 du codeur 110 selon le deuxième mode de réalisation peut comprendre au moins un élément fonctionnel choisi dans la liste comprenant :
- un élément de retour visuel ;
- un capteur de présence ;
- un actionneur haptique.

Dans l'exemple de la figure 16, un élément de retour visuel 190 est intégré sur la surface 134 du bouton 131. L'élément de retour visuel 190 peut par exemple comprendre un indicateur indiquant par exemple la fonction du codeur 110 ou un annonciateur indiquant la validation de la commande ou toute autre lumière d'ambiance.

Cette lumière d'ambiance peut par exemple être connectée au reste du cockpit pour créer une harmonie permettant d'améliorer l'aspect esthétique du bouton 131 du codeur 110. En effet, le repérage lumineux en cas d'urgence ou de turbulence peut représenter un atout du point de vue de la sécurité de l'aéronef. Cet éclairage peut être connecté et synchronisé avec le reste du cockpit. Dans ce cas, il pourrait changer de couleur en fonction du contexte durant le vol par exemple clignotement rouge en situation d'urgence.

Lorsque l'élément fonctionnel comprend un capteur de présence, celui-ci peut être intégré dans le bouton 131 pour activer des fonctions complémentaires et/ou pour détecter des positions de doigts sur le bouton. Par exemple, la fonctionnalité du codeur 110 peut être modifiée en fonction du nombre de doigts posés sur la surface 134.

Lorsque l'élément fonctionnel comprend un actionneur haptique, celui-ci est préférentiellement placé au bout du bouton 131 pour améliorer le ressenti haptique par l'utilisateur. Il peut présenter un actionneur piézoélectrique ou un moteur de vibration à balourd préférentiellement solidaire du corps fixe 122. L'actionneur peut être aussi un actionneur électromagnétique et agir entre le corps fixe 122 et le corps mobile 121. L'actionneur électromagnétique peut utiliser un enroulement ou une bobine solidaire du corps fixe 122 qui génère un champ magnétique qui attire ou repousse une pièce ferromagnétique ou magnétique suivant l'axe de codeur X. Cette dernière pièce peut être indépendante ou être une partie de l'un des anneaux 151, 152.

Comme cela est visible sur la figure 16, l'un ou plusieurs des éléments fonctionnels peuvent être disposés à l'intérieur du rotor 133 et du support 141. Dans un tel cas, les câbles 174 raccordant ces éléments fonctionnels peuvent s'étendre à l'intérieur du rotor 133 jusqu'un contrôleur externe.

Bien entendu, au moins l'un des éléments fonctionnels précités peut être également disposé dans le codeur 10 selon le premier mode de réalisation. Par ailleurs, un contrôleur de crantage similaire à celui décrit en relation avec le premier mode de réalisation peut être également disposé dans le codeur 110 selon le deuxième mode de réalisation. Il est également clair qu'il est possible de disposer le codeur 10 tel que décrit en relation avec le premier mode de réalisation entièrement dans la partie avant 12A du panneau 12. Il est également possible de disposer le codeur 110 tel que décrit en relation avec le deuxième mode de réalisation partiellement dans la partie derrière 12B et partiellement dans la partie avant 12A du panneau 12. Finalement, il doit être compris que la notion d'un premier corps avec tous les éléments associés peut être appliquée à un corps fixe et la notion d'un deuxième corps avec tous les éléments associés peut être appliquée à un corps mobile.

## Revendications

1. Codeur magnétique incrémental (10 ; 110) définissant un axe de codeur (X) et comprenant un corps fixe et un corps mobile par rapport au corps fixe selon au moins une première direction de codage (C1) correspondant à une translation le long de l'axe de codeur (X) selon une longueur de course en translation prédéterminée, le corps mobile étant mobile par rapport au corps fixe selon en outre une deuxième direction de codage (C2) perpendiculaire à la première direction de codage (C1) et correspondant à une rotation autour de l'axe de codeur (X). ;
l'un des corps, dit premier corps (21 ; 121), comprenant :
- un premier anneau (51 ; 151) s'étendant selon une première direction longitudinale confondue avec l'axe de codeur (X) et une première direction circonférentielle perpendiculaire à la première direction longitudinale, la première direction longitudinale correspondant à la première direction de codage (C1), le premier anneau (51 ; 151) définissant une alternance magnétique selon la première direction de codage (C1) ;
- un deuxième anneau (52 ; 152) s'étendant selon une deuxième direction longitudinale confondue avec l'axe de codeur (X) et une deuxième direction circonférentielle perpendiculaire à la deuxième direction longitudinale, la deuxième direction circonférentielle correspondant à la deuxième direction de codage (C2), le deuxième anneau (52 ; 152) définissant une alternance magnétique selon la deuxième direction de codage (C2) ;
l'autre corps, dit deuxième corps (22 ; 122), comprenant :
- au moins une première dent de crantage (71 ; 171) en matériau ferromagnétique ou magnétique disposée en regard du premier anneau (51 ; 151) pour créer un crantage lors d'un mouvement du corps mobile (21 ; 121) selon la première direction de codage (C1) ;
- une première paire de détecteurs magnétiques (61 ; 161) disposés en regard du premier anneau (51 ; 151) et configurés pour quantifier chaque mouvement du corps mobile selon la première direction de codage (C1) ;
- au moins une deuxième dent de crantage (72 ; 172) en matériau ferromagnétique ou magnétique disposée en regard du deuxième anneau (52 ; 152) pour créer un crantage lors d'un mouvement du corps mobile selon la deuxième direction de codage (C2) ; et
- une deuxième paire de détecteurs magnétiques (62 ; 162) disposés en regard du deuxième anneau (52 ; 152) et configurés pour quantifier chaque mouvement du corps mobile selon la deuxième direction de codage (C2).

2. Codeur (10 ; 110) selon la revendication 1, dans lequel les dents de crantage (71, 72 ; 171, 172) sont reliées rigidement entre elles par une pièce de raccordement (77), avantageusement faite d'un matériau ferromagnétique ou magnétique.

3. Codeur (21 ; 121) selon la revendication 2, dans lequel l'étendue longitudinale du deuxième anneau (52 ; 152) est choisie de sorte que le champ magnétique vu par le ou chaque deuxième dent de crantage (72 ; 172) et par la deuxième paire de détecteurs magnétiques (62 ; 162) est sensiblement constant sur toute la longueur de course en translation.

4. Codeur (21 ; 121) selon l'une quelconque des revendications précédentes, dans lequel :
- le premier anneau (51 ; 151) définit au moins un cran central et deux crans périphériques ;
- une position stable en translation étant définie lorsque la première dent de crantage (71 ; 171) est disposée en regard du cran central.

5. Codeur (21 ; 121) selon l'une quelconque des revendications précédentes, dans lequel l'alternance magnétique du ou de chaque anneau (51, 52 ; 151, 152) définit un pas de crantage constant.

6. Codeur (21 ; 121) selon la revendication 5, dans laquelle la surface de la ou de chaque dent de crantage (71, 72 ; 171, 172) présente une étendue inférieure ou égale au pas de crantage de l'anneau correspondant (51, 52 ; 151, 152).

7. Codeur (21 ; 121) selon la revendication 5 ou 6, dans lequel les détecteurs magnétiques (61, 62 ; 161, 162) d'une même paire de détecteurs sont décalés l'un de l'autre d'une fraction du pas de crantage de l'anneau correspondant (51, 52 ; 151, 152).

8. Codeur (10 ; 110) selon l'une quelconque des revendications précédentes, dans lequel le deuxième corps (22 ; 122) comprend pour au moins un anneau (51, 52 ; 151, 152), une pluralité de dents de crantage (71, 72 ; 171, 172) en matériau ferromagnétique ou magnétique disposée en regard de cet anneau pour créer un crantage lors d'un mouvement du corps mobile selon la direction de codage correspondante (C1, C2) ;
avantageusement, lesdites dents de crantage (71, 72 ; 171, 172) étant réparties de manière équidistante selon la direction circonférentielle correspondante.

9. Codeur (10 ; 110) selon l'une quelconque des revendications précédentes, comprenant en outre une butée de course pour la ou chaque direction de codage.

10. Codeur (10 ; 110) selon l'une quelconque des revendications précédentes, dans lequel le premier corps (21 ; 121) est le corps mobile et le deuxième corps (22 ; 122) est le corps fixe.

11. Codeur (110) selon l'une quelconque des revendications précédentes, dans lequel :
- le corps fixe est destiné à être fixé devant un panneau (12) formant un tableau de bord ;
- le corps fixe est englobé au moins partiellement par le corps mobile.

12. Codeur (10) selon l'une quelconque des revendications précédentes 1 à 10, dans lequel :
- le corps fixe est destiné à être fixé derrière un panneau (12) formant un tableau de bord ;
- le corps fixe englobe au moins partiellement le corps mobile.

13. Codeur (10 ; 110) selon l'une quelconque des revendications précédentes, comprenant en outre un bouton (31 ; 131) destiné à être orienté vers un opérateur ;
ledit bouton (31 ; 131) comprenant au moins un élément fonctionnel (190) choisi dans la liste comprenant :
- un élément de retour visuel ;
- un capteur de présence ;
- un actionneur haptique.

14. Codeur (10 ; 110) selon l'une quelconque des revendications précédentes, comprenant en outre un contrôleur des crantages complémentaire comprenant une bobine électromagnétique (82) solidaire de l'un des corps et configurée pour agir sur au moins une dent de crantage (71, 72 ; 171, 172) et/ou un élément ferromagnétique ou magnétique (83) solidaire de l'autre corps.

## Patentansprüche

1. Magnetischer Inkrementalcodierer (10; 110), der eine Codierachse (X) definiert und einen festen Körper sowie einen Körper umfasst, der relativ zu dem festen Körper in mindestens einer ersten Codierrichtung (C1) beweglich ist, die einer Translation entlang der Codierachse (X) mit einer vorbestimmten Translationshublänge entspricht, wobei der bewegliche Körper relativ zu dem festen Körper ferner in einer zweiten Codierrichtung (C2) senkrecht zu der
ersten Codierrichtung (C1) und entsprechend einer Drehung um die Codierachse (X) beweglich ist. ;
einer der Körper, der sogenannte erste Körper (21; 121), umfasst:
- einen ersten Ring (51; 151), der sich in einer ersten Längsrichtung, die mit der Codierachse (X) zusammenfällt, und in einer ersten Umfangsrichtung senkrecht zur ersten Längsrichtung erstreckt; wobei die erste Längsrichtung der ersten Codierrichtung (C1) entspricht, wobei der erste Ring (51; 151) eine magnetische Wechselwirkung gemäß der ersten Codierrichtung (C1) definiert;
- einen zweiten Ring (52; 152), der sich in einer zweiten Längsrichtung, die mit der Codierachse (X) zusammenfällt, und in einer zweiten Umfangsrichtung senkrecht zur zweiten Längsrichtung erstreckt, wobei die zweite Umfangsrichtung der zweiten Codierrichtung (C2) entspricht, wobei der zweite Ring (52; 152) eine magnetische Wechselwirkung entlang der zweiten Codierrichtung (C2) definiert;
der andere Körper, der sogenannte zweite Körper (22; 122), umfasst:
- mindestens einen ersten Verzahnungszahn (71; 171) aus ferromagnetischem oder magnetischem Material, der gegenüber dem ersten Ring (51; 151) angeordnet ist, um bei einer Bewegung des beweglichen Körpers (21; 121) entlang der ersten Codierrichtung (C1) eine Verzahnung zu erzeugen;
- ein erstes Paar Magnetdetektoren (61; 161), die gegenüber dem ersten Ring (51; 151) angeordnet und so konfiguriert sind, dass sie jede Bewegung des beweglichen Körpers entlang der ersten Codierrichtung (C1) quantifizieren;
- mindestens einen zweiten Verzahnungszahn (72; 172) aus ferromagnetischem oder magnetischem Material, der gegenüber dem zweiten Ring (52; 152) angeordnet ist, um bei einer Bewegung des beweglichen Körpers entlang der zweiten Codierrichtung (C2) eine Verzahnung zu erzeugen; und
- ein zweites Paar Magnetdetektoren (62; 162), die gegenüber dem zweiten Ring (52; 152) angeordnet und so konfiguriert sind, dass sie jede Bewegung des beweglichen Körpers entlang der zweiten Codierrichtung (C2) quantifizieren.

2. Codierer (10; 110) nach Anspruch 1, bei dem die Verzahnungszähne (71, 72; 171, 172) durch ein Verbindungsstück (77) starr miteinander verbunden sind, das vorteilhafterweise aus einem ferromagnetischen oder magnetischen Material hergestellt ist.

3. Codierer (21; 121) nach Anspruch 2, wobei die Längserstreckung des zweiten Rings (52; 152) so gewählt ist, dass das von dem oder jedem zweiten Verzahnungszahn (72; 172) und von dem zweiten Paar Magnetdetektoren (62; 162) gesehene Magnetfeld über die gesamte Translationshublänge im Wesentlichen konstant ist.

4. Codierer (21; 121) nach einem der vorherigen Ansprüche, wobei:
- der erste Ring (51; 151) mindestens eine zentrale Verzahnung und zwei periphere Verzahnungen definiert;
- wobei eine translationsstabile Position definiert ist, wenn der erste Verzahnungszahn (71; 171) gegenüber der zentralen Verzahnung angeordnet ist.

5. Codierer (21; 121) nach einem der vorhergehenden Ansprüche, wobei die magnetische Wechselwirkung des oder jedes Rings (51, 52; 151, 152) einen konstanten Verzahnungsabstand definiert.

6. Codierer (21; 121) nach Anspruch 5, bei dem die Oberfläche des oder jedes Verzahnungszahns (71, 72; 171, 172) eine Ausdehnung aufweist, die kleiner oder gleich dem Verzahnungsabstand des entsprechenden Rings (51, 52; 151, 152) ist.

7. Codierer (21; 121) nach Anspruch 5 oder 6, wobei die magnetischen Detektoren (61, 62; 161, 162) eines gleichen Detektorpaars um einen Bruchteil des Verzahnungsabstands des entsprechenden Rings (51, 52; 151, 152) gegeneinander versetzt sind.

8. Codierer (10; 110) nach einem der vorhergehenden Ansprüche, wobei der zweite Körper (22; 122) für mindestens einen Ring (51, 52; 151, 152) eine Vielzahl von Verzahnungszähnen (71, 72; 171, 172) aus ferromagnetischem oder magnetischem Material aufweist, die gegenüber diesem Ring angeordnet sind, um bei einer Bewegung des beweglichen Körpers entlang der entsprechenden Codierrichtung (C1, C2) eine Verzahnung zu erzeugen;
wobei die Rastzähne (71, 72; 171, 172) vorzugsweise entlang der entsprechenden Umfangsrichtung gleich beabstandet sind.

9. Codierer (10; 110) nach einem der vorhergehenden Ansprüche, der außerdem einen Hubanschlag für die oder jede Codierrichtung umfasst.

10. Codierer (10; 110) nach einem der vorhergehenden Ansprüche, wobei der erste Körper (21; 121) der bewegliche Körper ist und der zweite Körper (22; 122) der feste Körper ist.

11. Codierer (110) nach einem der vorherigen Ansprüche, wobei:
- der feste Körper dazu bestimmt ist, vor einer Platte (12) befestigt zu werden, die ein Armaturenbrett bildet;
- der feste Körper zumindest teilweise von dem beweglichen Körper umfasst wird.

12. Codierer (10) nach einem der Ansprüche 1 bis 10, wobei:
- der feststehende Körper dazu bestimmt ist, hinter einer Platte (12) befestigt zu werden, die ein Armaturenbrett bildet;
- der feste Körper den beweglichen Körper zumindest teilweise umschließt.

13. Codierer (10; 110) nach einem der vorhergehenden Ansprüche, der außerdem einen Knopf (31; 131) umfasst, der dazu bestimmt ist, auf einen Bediener gerichtet zu sein;
wobei der Knopf (31; 131) mindestens ein funktionelles Element (190) umfasst, das aus der Liste ausgewählt ist, die Folgendes umfasst:
- ein visuelles Feedback-Element;
- einen Anwesenheitssensor;
- einen haptischen Aktuator.

14. Codierer (10; 110) nach einem der vorhergehenden Ansprüche, der außerdem eine komplementäre Verzahnungssteuerung umfasst, die eine elektromagnetische Spule umfasst (82), die mit einem der Körper fest verbunden ist und so konfiguriert ist, dass sie auf mindestens einen Verzahnungszahn (71, 72; 171, 172) und/oder ein ferromagnetisches oder magnetisches Element (83), das mit dem anderen Körper fest verbunden ist, einwirkt.

## Claims

1. An incremental magnetic encoder (10; 110) defining an encoder axis (X) and comprising a fixed body and a movable body movable with respect to the fixed body along at least a first direction of encoding (C1) corresponding to a translation along the encoder axis (X) according to a predetermined translation travel length, the movable body being movable with respect to the fixed body further in a second direction of encoding (C2) perpendicular to the first direction of encoding (C1) and corresponding to rotation about the encoder axis (X) ;
one of the bodies, called first body (21; 121), comprising:
- a first ring (51; 151) extending along a first longitudinal direction coinciding with the encoder axis (X) and a first circumferential direction perpendicular to the first longitudinal direction, the first longitudinal direction corresponding to the first direction of encoding (C1), the first ring (51; 151) defining a magnetic alternation along the first direction of encoding (C1);
- a second ring (52; 152) extending along a second longitudinal direction coinciding with the encoder axis (X) and a second circumferential direction perpendicular to the second longitudinal direction, the second circumferential direction corresponding to the second direction of encoding (C2), the second ring (52; 152) defining a magnetic alternation along the second direction of encoding (C2);
the other body, called second body (22; 122), comprising:
- at least one first notching tooth (71; 171) made of ferromagnetic or magnetic material arranged opposite the first ring (51; 151) so as to create a notching during a movement of the movable body (21; 121) along the first direction of encoding (C1);
- a first pair of magnetic detectors (61; 161) arranged opposite the first ring (51; 151) and configured for quantifying each movement of the movable body along the first direction of encoding (C1);
- at least one second notching tooth (72; 172) made of ferromagnetic or magnetic material arranged opposite the second ring (52; 152) so as to create a notching during a movement of the movable body along the second direction of encoding (C2); and
- a second pair of magnetic detectors (62; 162) arranged opposite the second ring (52; 152) and configured for quantifying each movement of the movable body along the second direction of encoding (C2).

2. The encoder (10; 110) according to claim 1, wherein the notching teeth (71, 72; 171, 172) are rigidly connected to one another by a connecting piece (77), preferentially made of ferromagnetic or magnetic material.

3. The encoder (21; 121) according to claim 2, wherein the longitudinal extent of the second ring (52; 152) is selected such that the magnetic field seen by the or each second notching tooth (72; 172) and by the second pair of magnetic sensors (62; 162) is substantially constant over the entire length of travel in translation.

4. The encoder (21; 121) according to any of the preceding claims, wherein:
- the first ring (51; 151) defines at least one central notch and two peripheral notches; and
- a position which is stable in translation being defined when the notching tooth (71; 171) is arranged opposite the central notch.

5. The encoder (21; 121) according to any of the preceding claims, wherein the magnetic alternation of the or of each ring (51, 52; 151, 152) defines a constant notching pitch.

6. The encoder (21; 121) according to claim 5, wherein the surface of the or each notching tooth (71, 72; 171, 172) has an extent less than or equal to the notching pitch of the corresponding ring (51, 52; 151, 152).

7. The encoder (21; 121) according to claim 5 or 6, wherein the magnetic detectors (61, 62; 161, 162) of a same pair of detectors are offset from each other by a fraction of the notching pitch of the corresponding ring (51, 52; 151, 152).

8. The encoder (10; 110) according to any of the preceding claims, wherein the second body (22; 122) comprises for at least one ring (51, 52; 151, 152), a plurality of notching teeth (71, 72; 171, 172) made of ferromagnetic or magnetic material arranged opposite the ring so as to create a notching during a movement of the movable body along the corresponding direction of encoding (C1, C2);
advantageously, said notching teeth (71, 72 ; 171, 172) are distributed equidistantly along the corresponding circumferential direction.

9. The encoder (10; 110) according to any of the preceding claims, further comprising a travel stop for the or each direction of encoding.

10. The encoder (10; 110) according to any of the preceding claims, wherein the first body (21; 121) is the movable body and the second body (22; 122) is the fixed body.

11. The encoder (110) according to any of the preceding claims, wherein:
- the fixed body is intended for being attached in front of a panel (12) forming an instrument panel;
- the fixed body is at least partially sheathed by the movable body.

12. The encoder (10) according to any of the preceding claims 1 to 10, wherein:
- the fixed body is intended for being attached behind a panel (12) forming an instrument panel;
- the fixed body sheathes at least partially the movable body.

13. The encoder (10; 110) according to any of the preceding claims, further comprising a button (31; 131) intended for being oriented towards an operator;
said button (31; 131) comprising at least one functional element (190) selected from the list comprising:
- an element of visual feedback;
- a presence sensor;
- a haptic actuator.

14. The encoder (10; 110) according to any of the preceding claims, further comprising a supplementary notching controller comprising an electromagnetic coil (82) rigidly attached to one of the bodies and configured for acting on the or each notching tooth (71, 72; 171, 172) and/or a ferromagnetic or magnetic element (83) rigidly attached to the other body
